# EUROPÄISCHE PATENTANMELDUNG

(11) **EP 4 574 783 A1**
(43) Veröffentlichungstag der Anmeldung: **25.06.2025**
(21) Anmeldenummer: 23219144.5
(22) Anmeldetag: 21.12.2023
(51) Int. Cl.: C03B 37/012

(54) **VERFAHREN UND VORFORM FÜR DIE HERSTELLUNG EINER HOHLKERNFASER SOWIE VERFAHREN ZUR HERSTELLUNG EINER VORFORM FÜR EINE HOHLKERNFASER**

(71) Anmelder: Heraeus Quarzglas GmbH & Co. KG, 63450 Hanau (DE)
(72) Erfinder: Dr. Rosenberger, Manuel, 63801 Kleinostheim (DE); Plass, Jaqueline, 63801 Kleinostheim (DE); Dr. Schuster, Kay, 06803 Bitterfeld-Wolfen (DE); Koc, Burak, 63450 Hanau (DE); Hammerschmidt, Joerg, 63801 Kleinostheim (DE)
(74) Vertreter: Heraeus IP

(57) **Zusammenfassung**

Ein bekanntes Verfahren zur Herstellung einer antiresonanten Hohlkernfaser, die einen Hohlkern und einen inneren Mantelbereich aufweist, der mehrere Antiresonanzelemente umfasst, umfasst die Verfahrensschritte: (a) Bereitstellen eines Hüllrohres, das eine Hüllrohr-Innenbohrung mit einem Hüllrohr-Innendurchmesser und eine Hüllrohr-Längsachse aufweist; (b) Bereitstellen einer Vielzahl von rohrförmigen Antiresonanzelement-Vorformlingen, die jeweils eine Rohrlänge und eine Rohr-Längsachse aufweisen; (c) Einbringen der Vielzahl der Antiresonanzelement-Vorformlinge in die Hüllrohr-Innenbohrung unter Bildung einer primären Vorform; und (d) Elongieren der primären Vorform zu der Hohlkernfaser oder Weiterverarbeitung der primären Vorform zu einer sekundären Vorform, aus der die Hohlkernfaser gezogen wird. Um hiervon ausgehend ein Verfahren anzugeben, mit dem eine hohe Präzision der Antiresonanzelemente und eine exakte Positionierung in der Hohlkernfasern reproduzierbar erreicht werden kann, wird vorgeschlagen, dass das Bereitstellen der Antiresonanzelement-Vorformlinge gemäß Verfahrensschritt (b) ein Anordnen der Antiresonanzelement-Vorformlinge 2 mit parallelen Rohr-Längsachsen in einer polygonalen Konfiguration, und ein Zusammenfügen der polygonal konfigurierten Antiresonanzelement-Vorformlinge unter Bildung eines gefügten Ensembles 10 umfasst, das eine Mittelachse, ein oberes Ensemble-Ende, ein unteres Ensemble-Ende und eine Ensemble-Länge aufweist.

## Beschreibung

### Technischer Hintergrund

Die Erfindung liegt auf dem Gebiet der optischen Fasertechnologie und dabei insbesondere im Bereich der antiresonanten Hohlkern-Fasern (kurz: ARHCF). Diese Fasern ermöglichen die Lichtführung in einem "hohlen" Kern, der entweder evakuiert oder mit einem Gas gefüllt ist. Dabei verspricht diese Fasertechnologie eine niedrige optische Dämpfung, ein sehr breites Transmissionsspektrum (insbesondere auch im UV- oder IR-Wellenlängenbereich) und eine geringe Latenzzeit bei der Datenübertragung. Darüber hinaus eignen sich diese Fasern zur Spektroskopie sowie zur Übertragung von kurzen Laserpulsen.

Insbesondere betrifft die Erfindung ein Verfahren zur Herstellung einer antiresonanten Hohlkernfaser, die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:
(a) Bereitstellen eines Hüllrohres, das eine Hüllrohr-Innenbohrung mit einem Hüllrohr-Innendurchmesser und eine Hüllrohr-Längsachse aufweist,
(b) Bereitstellen einer Vielzahl von rohrförmigen Antiresonanzelement-Vorformlingen, die jeweils eine Rohrlänge und eine Rohr-Längsachse aufweisen,
(c) Einbringen der Vielzahl der Antiresonanzelement-Vorformlinge in die Hüllrohr-Innenbohrung unter Bildung einer primären Vorform,
(d) Elongieren der primären Vorform zu der Hohlkernfaser oder Weiterverarbeitung der primären Vorform zu einer sekundären Vorform, aus der die Hohlkernfaser gezogen wird.

Außerdem betrifft die Erfindung ein Verfahren zur Herstellung einer Vorform für eine antiresonante Hohlkernfaser. Insbesondere ein Verfahren zur Herstellung einer Vorform für eine antiresonante Hohlkernfaser, die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:
(a) Bereitstellen eines Hüllrohres, das eine Hüllrohr-Innenbohrung mit einem Hüllrohr-Innendurchmesser und eine Hüllrohr-Längsachse aufweist,
(b) Bereitstellen einer Vielzahl von rohrförmigen Antiresonanzelement-Vorformlingen, die jeweils eine Rohrlänge und eine Rohr-Längsachse aufweisen,
(c) Einbringen der Vielzahl der Antiresonanzelement-Vorformlinge in die Hüllrohr-Innenbohrung unter Bildung einer primären Vorform,
(d) optionale Weiterverarbeitung der primären Vorform zu einer sekundären Vorform für die Hohlkernfaser, wobei die Weiterverarbeitung eine einmalige oder wiederholte Durchführung von einem oder mehreren der folgenden Heißformprozesse umfasst:
   (i) Elongieren,
   (ii) Kollabieren,
   (iii) Kollabieren und gleichzeitiges Elongieren,
   (iv) Aufkollabieren von zusätzlichem Mantelmaterial,
   (v) Aufkollabieren von zusätzlichem Mantelmaterial und anschließendes Elongieren,
   (vi) Aufkollabieren von zusätzlichem Mantelmaterial und gleichzeitiges Elongieren.

Darüber hinaus betrifft die Erfindung eine Vorform, aus der eine antiresonante Hohlkernfaser gezogen wird. Insbesondere eine Vorform, die einen hohlen Kernbereich und einen Mantelbereich aufweist, der ein Hüllrohr mit einer Hüllrohr-Wandung und eine Anzahl an einer Innenseite der Hüllrohr-Wandung angeordneter rohrförmiger Antiresonanzelement-Vorformlinge umfasst.

Herkömmliche Monomode-Lichtleitfasern aus Vollmaterial haben einen Kernbereich aus Glas, der von einem Mantelbereich aus Glas mit niedrigerem Brechungsindex umgeben ist. Die Lichtleitung beruht dabei auf Totalreflexion zwischen Kern- und Mantelbereich. Die Wechselwirkungen des geführten Lichtes mit dem Vollmaterial sind jedoch mit einer erhöhten Latenz bei der Datenübertragung und relativ niedrigen Schädigungsschwellen gegenüber energiereicher Strahlung verbunden.

Im Unterschied dazu besteht bei "Hohlkernfasern" der Kern aus einem evakuierten oder einem mit Gas oder Flüssigkeit gefüllten Hohlraum, so dass sich eine vergleichsweise geringere Wechselwirkung des Lichtes mit dem Glas ergibt. In Abhängigkeit vom physikalischen Mechanismus der Lichtleitung werden Hohlkernfasern unterteilt in "photonische Bandlückenfasern" und "Antiresonanz-Reflexionsfasern".

Bei "photonischen Bandlückenfasern" ist der hohle Kernbereich von einem Mantel umgeben, in dem kleine Hohlkanäle periodisch angeordnet sind. Die periodische Struktur der Hohlkanäle im Mantel bewirkt den in Anlehnung an die Halbleitertechnologie als "photonische Bandlücke" bezeichneten Effekt, wonach an den Mantelstrukturen gestreutes Licht bestimmter Wellenlängenbereiche aufgrund von Braggreflexion im zentralen Hohlraum konstruktiv interferiert und sich nicht transversal im Mantel ausbreiten kann.

Bei der als "antiresonante Hohlkernfaser" ("antiresonant hollow-core fibers"; ARHCF) bezeichneten Ausführungsform der Hohlkernfaser ist der hohle Kernbereich von einem inneren Mantelbereich umgeben, in dem sogenannte "antiresonante Elemente" (oder "Antiresonanzelemente"; kurz: "AREs") angeordnet sind. Die um den Hohlkern gleichmäßig verteilten Wandungen der Antiresonanzelemente können als in Antiresonanz betriebene Fabry-Perot-Kavitäten wirken, die das auftreffende Licht reflektieren und durch den Faserkern leiten.

Diese Fasertechnologie verspricht eine niedrige optische Dämpfung, ein sehr breites Transmissionsspektrum (auch im UV- oder IR-Wellenlängenbereich) und eine geringe Latenz bei der Datenübertragung.

Anwendungen der Hohlkernfasern liegen auf dem Gebiet der Datenübertragung, der Hochleistungsstrahlführung, beispielsweise zur Materialbearbeitung, der Modalfilterung, der nichtlinearen Optik, insbesondere zur Superkontinuumserzeugung, vom ultravioletten bis infraroten Wellenlängenbereich. Darüber hinaus eignen sich diese Fasern für spektroskopische Anwendungen sowie zur Übertragung von kurzen Laserpulsen.

### Stand der Technik

Jeder Antiresonanzelement-Vorformling weist eine gewisse Abweichung von seiner Sollgeometrie auf und jeder Schritt der Positionierung und Umformung führt zwangsläufig zu Geometrieabweichungen, die sich in der Vorform zu einem absoluten Geometriefehler aufsummieren können. Dies stellt hohe Anforderungen an die Genauigkeit beim Positionieren und Fixieren der Ausgangselemente an ihren jeweilen Soll-Positionen insbesondere bei kompakten Anordnungen und kurzen Abständen der Ausgangselemente zueinander. Zur Realisierung geringer Dämpfungswerte und breiter Transmissionsbereiche ist neben einer gleichmäßigen Wandstärke der Antiresonanzelemente insbesondere deren azimutale Position an der Innenwand des Hüllrohres entscheidend. Beispielsweise sollte der Abstand der Anheftpunkte der Antiresonanzelement-Vorformlinge an der Hüllrohr-Innenwand sowie der periphere Abstand zwischen den Antiresonanzelement-Vorformlinge möglichst gleichmäßig sein.

Diese Problematik wird erschwert, wenn die Antiresonanzelemente nicht als einfaches Strukturelement ausgebildet sind, sondern sich aus mehreren, miteinander verschachtelten (englisch: nested) Antiresonanzelementen zusammensetzen. Die Vorformen für derartige "Nested Antiresonant Nodeless Hollow Core Fibers" (NANF) sind aus einer Vielzahl Antiresonanter Elemente (ARE) zusammengesetzt. Sie werden häufig im sogenannten "Stack-and-Draw"-Verfahren hergestellt. Beispielsweise werden zur Herstellung einer Vorform für eine Hohlkernfaser im "NANF"-Design mehrere Antiresonanzelement-Vorformlinge, jeweils bestehend aus einem Antiresonanzelement-Außenrohr (im Folgenden kurz: ARE-Außenrohr), und einseitig an der ARE-Außenrohr-Innenmantelfläche angeordnetes Nested-Element-Innenrohr (im Folgenden kurz: NE-Innenrohr) an der Innenseite eines Hüllrohres angebracht.

Zur Verbesserung der Positionierungsgenauigkeit der Antiresonanzelement-Vorformlinge ist aus der WO 2022/128271 A1 ein Verfahren zur Herstellung von Vorformen für antiresonante Hohlkernfasern bekannt, bei dem ein ARE-Außenrohr aus Quarzglas und ein an dessen Innenwandung angeschweißtes NE-Innenrohr aus Quarzglas gemeinsam zu einem Kapillarhalbzeug elongiert werden. Das elongierte Kapillarhalbzeug setzt sich somit aus einer ARE-Außenkapillare und einer fest mit dieser verbundenen NE-Innenkapillare zusammen. Die elongierten Kapillarhalbzeuge werden an der Innenseite eines Hüllrohres aus Quarzglas montiert. Für diese Montage kann eine Schablone eingesetzt werden. Die Kapillarhalbzeuge werden mit der Hüllrohr-Innenseite verschmolzen und dieses Ensemble wird zu einer primären Vorform elongiert, aus der anschließend die Hohlkernfaser gezogen wird.

Aus der WO 2019/008352 A1 ist ein Verfahren zur Herstellung von Vorformen für antiresonante Hohlkernfasern bekannt, bei dem ARE-Außenrohre an der Innenseite eines Hüllrohres aus Quarzglas positioniert und mittels Laser dort angebondet werden. An der Innenseite des ARE-Außenrohres kann vorab ein NE-Innenrohr ebenfalls mittels Laser fixiert und so ein vorgefertigte Kapillarhalbzeug erzeugt werden. Die Positionierung des ARE-Außenrohres kann beispielsweise durch Gravitation oder mittels magnetischer Elemente erfolgen.

In der WO 2019/053412 A1 erfolgt die Positionierung der ARE-Außenrohre an vordefinierten peripheren Stellen innerhalb des Hüllrohres mit Hilfe von Abstandselementen, die jeweils mit zwei benachbarten ARE-Außenrohren in Kontakt sind. Der radiale Abstand r₂ zwischen diesen Kontaktpunkten und der Hüllrohr-Längsachse ist größer als der radiale Abstand r₁ zwischen den Längsachsen des ARE-Außenrohres und der Hüllrohr-Längsachse. Die Abstandselemente können eine integrale Struktur des Hüllrohres bilden. Dabei kann die Hüllrohr-Innenseite durch mechanische Bearbeitung so geformt werden, dass die Abstandselemente von der Innenseite radial nach innen ragen. Bei einem Beispiel haben die Abstandselemente einen rechteckigen Querschnitt, der aus der konkaven Innenseite des Hüllrohres herausragt.

### Technische Aufgabenstellung

Die Strukturierung der Hüllrohr-Innenwand zur Erzeugung von Abstandselementen ist zeitintensiv. Beim Anschweißen der Antiresonanzelement-Vorformlinge an den Abstandselementen kann es durch Sublimation von SiO₂ zu Soot-Ablagerungen kommen, die sich auf die optischen Eigenschaften der Hohlkernfaser ungünstig auswirken.

Beim Elongieren eines vorgefertigten Kapillarhalbzeugs aus ARE-Außenrohr und NE-Innenrohr kommt es leicht zu ovalen (elliptischen) Verformungen der anfänglich runden Rohrquerschnitte. Ein Grund dafür ist, dass infolge des Kontakts an der Innenmantelfläche des ARE-Außenrohrs Kräfte wirken, die zu einer Verformung des Querschnitts und zu einer ovalen Querschnittsform führen können. Die Ovalität dieses Kapillarhalbzeugs erschwert die exakte Montage an der Hüllrohr-Innenwandung und die Festlegung seines Außendurchmessers für nachfolgende Ziehprozesse und behindert damit eine exakte und reproduzierbare Vorhersage des Ziehergebnisses in Form der Hohlkernfaser.

Zur Einhaltung der Resonanz- beziehungsweise Antiresonanzbedingungen sind aber bereits geringe Maßabweichungen in der Größenordnung der Arbeitswellenlänge des zu führenden Lichts nicht tolerierbar.

Ein Ziel der Erfindung ist es daher, ein Verfahren zur Herstellung einer antiresonanten Hohlkernfaser und einer Vorform für antiresonante Hohlkernfasern bereitzustellen, bei denen eine hohe Präzision der Antiresonanzelemente und eine exakte Positionierung in der Hohlkernfasern reproduzierbar erreicht werden kann. Insbesondere soll eine möglichst exakte Positionierung der Antiresonanzelement-Vorformlinge an vorgegebenen azimutalen Positionen des Hüllrohes ermöglicht werden und Soot-Ablagerungen verhindert oder verringert werden, um eine Vorhersage des Ziehergebnisses zu erleichtern.

Darüber hinaus liegt der Erfindung die Aufgabe zugrunde, eine Vorform anzugeben, aus der reproduzierbar eine antiresonante Hohlkernfaser mit möglichst exakt positionierten und geometrisch präzisen Antiresonanzelementen gezogen werden kann.

### Zusammenfassung der Erfindung

Hinsichtlich des Verfahrens zur Herstellung der antiresonanten Hohlkernfaser wird diese Aufgabe durch ein Verfahren mit den Merkmalen von Anspruch 1 gelöst.

Ausgehend von einem Verfahren zur Herstellung der Hohlkernfaser gemäß der eingangs genannten Gattung umfasst das Bereitstellen der Antiresonanzelement-Vorformlinge gemäß Verfahrensschritt (b) ein Anordnen der Antiresonanzelement-Vorformlinge mit parallelen Rohr-Längsachsen in einer polygonalen Konfiguration, und ein Zusammenfügen der polygonal konfigurierten Antiresonanzelement-Vorformlinge unter Bildung eines gefügten Ensembles, das eine Mittelachse, das ein oberes Ensemble-Ende, ein unteres Ensemble-Ende und eine Ensemble-Länge aufweist.

Ausgangspunkt für die Herstellung der antiresonanten Hohlkernfaser ist eine Vorform, die hier auch als "primäre Vorform" bezeichnet wird. Die Herstellung der primären Vorform umfasst üblicherweise den Einbau von Antiresonanzelement-Vorformlingen und deren Verbindung mit der Innenseite des Hüllrohres. Bei der Erfindung liegt mindestens ein Teil der Antiresonanzelement-Vorformlinge in Form eines vorkonfektionierten, gefügten Ensembles vor.

Das gefügte Ensemble wird von einer Vielzahl miteinander verbundener Antiresonanzelement-Vorformlingen gebildet, die - wie bei einem Palisadenring - mit parallelen Längsachsen in einer festen Position zueinander in einer symmetrischen (regelmäßig) polygonalen oder in einer nicht-symmetrischen polygonalen, geschlossenen Konfiguration angeordnet sind. Die Vorkonfektionierung hat mehrere Vorteile:
- Es entfallen Positionierungs- und Ausrichtungsmaßnahmen, die andernfalls bei der Montage zur Herstellung der primären Vorform erforderlich wären. Das genaue Positionieren und das Fixieren der Einzelkomponenten des Ensembles ist außerhalb der Hüllrohr-Innenbohrung einfacher zu bewerkstelligen als in der Innenbohrung. Insoweit werden diese Montageschritte erleichtert und die Maßhaltigkeit der Antiresonanzelement-Vorformlinge wird verbessert.
- Eine besondere konstruktive Gestaltung der Hüllrohr-Innenwand zwecks genauer Positionierung einzelner Antiresonanzelement-Vorformlinge ist nicht erforderlich. Im einfachsten Fall hat die Hüllrohr-Innenbohrung einen runden Querschnitt.
- Erst im Verfahrensschritt (c) wird das gefügte Ensemble in die Hüllrohr-Innenbohrung eingesetzt. Davor erfolgt vorzugsweise eine Qualitätskontrolle, bei der beispielsweise die Maßhaltigkeit des Ensembles und die Positionen und gegenseitigen Ausrichtungen der einzelnen Antiresonanzelement-Vorformlinge überprüft werden. Bei den bisher bekannten Methoden ist eine Qualitätskontrolle vorab nicht möglich, sondern erst nach dem Einsetzen der Antiresonanzelement-Vorformlinge in die Hüllrohr-Innenbohrung.
- Darüber hinaus können die Abmessungen des Hüllrohres, insbesondere der Hüllrohr-Innendurchmesser an die Abmessungen des gefügten Ensembles angepasst, beziehungsweise es kann ein zu diesen Abmessungen passendes Hüllrohr ausgewählt werden. Dadurch können beispielsweise Maßabweichungen berücksichtigt werden, die durch oval verformte Antiresonanzelement-Vorformlinge im gefügten Ensemble entstehen können.

Im Hinblick darauf wird der Außendurchmesser des gefügten Ensembles von einem Hüllkreis definiert, wobei gemäß Verfahrensschritt (a) ein Hüllrohr bereitgestellt wird, dessen Hüllrohr-Innendurchmesser um eine Spaltweite größer ist als der Hüllkreis.

Das Hüllrohr kann somit nachträglich so ausgewählt werden, dass die Spaltweite möglichst klein ist. Die kleine Spaltweite erleichtert ein anschließendes defektfreies Verbinden des gefügten Ensembles mit der Hüllrohr-Innenwand, das beispielsweise durch Kollabieren oder Elongieren der primären Vorform erfolgen kann. Spaltweiten von weniger als 0,2mm sind aus Praktikabilitätsgründen nicht bevorzugt.

Die unter Einsatz des gefügten Ensembles erzeugte primäre Vorform kann direkt zu der Hohlkernfaser gezogen werden. In der Regel wird die primäre Vorform aber weiterverarbeitet, um daraus eine hier als "sekundäre Vorform" bezeichnete Vorform zu erzeugen. Gegebenenfalls wird die Hohlkernfaser aus der sekundären Vorform gezogen. Die Herstellung der sekundären Vorform umfasst somit Verfahrensschritte, bei denen Ausgangselemente für Antiresonanzelemente der Hohlkernfaser hergestellt und zueinander positioniert werden und mindestens einen Heißverformungsschritt.

Die primäre Vorform und die sekundäre Vorform sind entweder monolithische Körper oder sie sind Bestandteil eines koaxialen Ensembles von Bauteilen mit einem Überfangzylinder oder mit mehreren Überfangzylindern, das direkt zu der Hohlkernfaser gezogen wird. Der allgemeine Begriff "Vorform" wird hier zur Bezeichnung desjenigen Bauteils oder desjenigen koaxialen Ensembles von Bauteilen verstanden, aus der die Hohlkernfaser letztlich gezogen wird.

Das Hinzufügen von Mantelmaterial erfolgt beispielsweise durch Aufkollabieren eines Überfangzylinders auf die primäre Vorform oder auf die sekundäre Vorform. Die koaxiale Anordnung aus primärer Vorform und Überfangzylinder wird beim Aufkollabieren des Überfangzylinders elongiert oder sie wird nicht elongiert.

Die Fügeverbindung beruht bevorzugt auf einem Stoffschluss. Sie wird beispielsweise durch Verschweißen der Antiresonanzelement-Vorformlinge untereinander erzeugt. Beispielsweise wird das Ensemble in einem lokalen Bereich erhitzt und erweicht, oder das Ensemble wird insgesamt zonenweise erhitz und erweicht und dabei zu dem gefügten Ensemble gestreckt (elongiert).

Es hat sich aber als vorteilhaft erwiesen, wenn im gefügten Ensemble die Antiresonanzelement-Vorformlinge in einem Abstand voneinander angeordnet sind.

Die Antiresonanzelement-Vorformlinge haben gegebenenfalls - in Umfangsrichtung gesehen - keinen direkten Kontakt miteinander, sondern sie sind über Zwischenelemente miteinander verbunden.

Demnach weist bei einer bevorzugten Verfahrensweise das gefügte Ensemble Fügeverbindungen zwischen mindestens einem Zwischenelement und den Antiresonanzelement-Vorformlingen auf.

Das Zwischenelement ist beispielsweise eine Verbindungsmasse, bevorzugt ist es aber ein Verbindungskörper. Die Verbindungsmasse beziehungsweise der Verbindungskörper bestehen aus dem gleichen Glas wie die Antiresonanzelement-Vorformling, oder sie bestehen aus einem anderen Glas, vorzugsweise einem Glas mit niedrigerer Viskosität als nicht dotiertes Quarzglas.

Der Verbindungskörper kann sich über die gesamte Länge der Antiresonanzelement-Vorformlinge erstrecken. Bei einer bevorzugten Verfahrensweise ist der Verbindungskörper aber vergleichsweise kurz, das heißt: er weist eine Längserstreckung auf, die kürzer ist als die Ensemble-Länge, wobei er gegebenenfalls im Bereich des oberen Ensemble-Endes und/oder im Bereich des unteren Ensemble-Endes angeordnet ist.

Vorzugsweise ist mindestens ein Verbindungskörper sowohl im Bereich des oberen Ensemble-Endes als auch im Bereich des unteren Ensemble-Endes angeordnet. Die Längserstreckung der Verbindungskörper beträgt beispielsweise weniger als 10% der Ensemble-Länge, bevorzugt weniger als 5%.

Der mindestens eine Verbindungskörper ist vorteilhafterweise als Kugel oder mindestens über einen Längenabschnitt seiner Längserstreckung als Zylinder ausgebildet.

Der mindestens eine zylinderförmige Verbindungskörper ist beispielsweise ein Rohr oder ein Vollmaterial-Stab. Gegebenenfalls kann ein Ende des Zylinders mit einem Zentrierungselement versehen sein, das beispielsweise in Form eines Konus, einer Spitze und/oder einer Kugel ausgebildet ist, wobei das Zentrierungselement aus dem oberen oder dem unteren Ensemble-Ende herausragt.

Das aus dem stirnseitigen Ende des gefügten Ensembles herausragende Zentrierungselement beziehungsweise die beidseitig herausragenden Zentrierungselemente sind Bestandteil des gefügten Ensembles und können bei dessen Weiterverarbeitung zur Positionierung des Ensembles genutzt werden, beispielsweise beim Einsetzen in das Hüllrohr.

Insbesondere im Hinblick auf die Positionierung des Ensembles im Hüllrohr ist bei einer besonders vorteilhaften Verfahrensweise vorgesehen, dass das Hüllrohr an einer Stirnseite mit einem Halterohr verbunden wird, das koaxial zur Hüllrohr-Längsachse eine Verengung mit einem Zentrierungsloch aufweist, und dass beim Einbringen des gefügten Ensembles in die Hüllrohr-Innenbohrung das Zentrierungselement in das Zentrierungsloch teilweise hineinragt.

Bei einer ersten bevorzugten Verfahrensvariante weist der mindestens eine Verbindungskörper eine koaxial zur Ensemble-Mittelachse verlaufende Mittelachse und eine Außenmantelfläche auf, um die herum die Vielzahl der Antiresonanzelement-Vorformlinge gleichmäßig verteilt ist.

Der mindestens eine Verbindungskörper erstreckt sich hierbei in der Mittelachse des Ensembles. Im einfachsten Fall hat er eine im Querschnitt runde Außenmantelfläche. Diese definiert gegebenenfalls einen Hüllkreis, um den die Antiresonanzelement-Vorformlinge verteilt sind. Die Antiresonanzelement-Vorformlinge sind mit der Außenmantelfläche des Verbindungskörpers verbunden; beispielsweise durch Anschweißen oder durch Verkleben. Der zentral angeordnete Verbindungskörper verschließt einen Teil des Innenraums der polygonalen Konfiguration beziehungsweise einen Teil des hohlen Kerns der Hohlkanalfaser. Die Längserstreckung in Richtung der Ensemble-Längsachse ist so kurz wie möglich und nur so groß wie erforderlich.

Bei einer zweiten bevorzugten Verfahrensvariante ist zwischen benachbarten Antiresonanzelement-Vorformlingen jeweils ein Verbindungskörper angeordnet.

Die Verbindungskörper verbinden benachbarte Antiresonanzelement-Vorformlinge miteinander und verhindern gleichzeitig deren unmittelbaren Kontakt miteinander. Sie wirken insoweit auch als Abstandselemente. Die Anzahl der Verbindungskörper ist in diesem Fall mindestens so hoch wie die Zahl der Antiresonanzelement-Vorformlinge des Ensembles. Das gefügte Ensemble umfasst mindestens drei, vorzugsweise mindestens fünf Antiresonanzelement-Vorformlinge.

Im einfachsten Fall sind die Verbindungskörper Hohlzylinder oder Vollzylinder mit einem kreisrunden Querschnitt. Die Querschnittsfläche der Verbindungskörper kann klein sein im Vergleich zur Querschnittsfläche der Antiresonanzelement-Vorformlinge. Es ist auch vorteilhaft, wenn die Verbindungskörper im Querschnitt gesehen innerhalb des Hüllkreises des gefügten Ensembles liegen und diesen nicht berühren.

Die Verbindungskörper können auch konisch ausgeführt sein. Sie können beispielsweise und bei stirnseitiger Einführung im noch nicht gefügten Ensemble zur azimutalen Ausrichtung von Antiresonanzelement-Vorformlingen dienen.

Hinsichtlich des Verfahrens zur Herstellung einer Vorform für eine antiresonante Hohlkernfaser wird die oben angegebene Aufgabe durch ein Verfahren gemäß Anspruch 12 gelöst.

Ausgehend von einem Verfahren zur Herstellung der Vorform gemäß der eingangs genannten Gattung umfasst das Bereitstellen der Antiresonanzelement-Vorformlinge gemäß Verfahrensschritt (b) ein Anordnen der Antiresonanzelement-Vorformlinge mit parallelen Rohr-Längsachsen zu einer polygonalen Konfiguration, und ein Zusammenfügen der polygonal konfigurierten Antiresonanzelement-Vorformlinge unter Bildung eines gefügten Ensembles, das eine Mittelachse, ein oberes Ensemble-Ende, ein unteres Ensemble-Ende und eine Ensemble-Länge aufweist.

Es wird ein vorkonfektioniertes, selbsttragendes Ensemble aus einer Vielzahl von Antiresonanzelement-Vorformling hergestellt, die in symmetrisch-polygonaler oder in unsymmetrische-polygonaler Konfiguration um einen Innenraum angeordnet sind und die eine feste, vorgegebene und nachprüfbare Position und Ausrichtung zueinander haben. Durch die Vorkonfektionierung entfallen Positionierungs- und Ausrichtungsmaßnahmen, die andernfalls bei der Montage zur Herstellung der primären Vorform erforderlich wären. Insoweit werden diese Montageschritte erleichtert und die Maßhaltigkeit der Antiresonanzelement-Vorformlinge wird verbessert.

Die Vorkonfektionierung hat mehrere Vorteile:
- Es entfallen Positionierungs- und Ausrichtungsmaßnahmen, die andernfalls bei der Montage zur Herstellung der primären Vorform erforderlich wären. Das genaue Positionieren und das Fixieren der Einzelkomponenten des Ensembles ist außerhalb der Hüllrohr-Innenbohrung einfacher zu bewerkstelligen als in der Innenbohrung. Insoweit werden diese Montageschritte erleichtert und die Maßhaltigkeit der Antiresonanzelement-Vorformlinge wird verbessert.
- Eine besondere konstruktive Gestaltung der Hüllrohr-Innenwand zwecks genauer Positionierung einzelner Antiresonanzelement-Vorformlinge ist nicht erforderlich. Im einfachsten Fall hat die Hüllrohr-Innenbohrung einen runden Querschnitt.
- Erst im Verfahrensschritt (c) wird das gefügte Ensemble in die Hüllrohr-Innenbohrung eingesetzt. Davor erfolgt vorzugsweise eine Qualitätskontrolle, bei der beispielsweise die Maßhaltigkeit des Ensembles und die Positionen und gegenseitigen Ausrichtungen der einzelnen Antiresonanzelement-Vorformlinge überprüft werden. Bei den bisher bekannten Methoden ist eine Qualitätskontrolle vorab nicht möglich, sondern erst nach dem Einsetzen der Antiresonanzelement-Vorformlinge in die Hüllrohr-Innenbohrung.
- Darüber hinaus können die Abmessungen des Hüllrohres, insbesondere der Hüllrohr-Innendurchmesser an die Abmessungen des gefügten Ensembles angepasst, beziehungsweise es kann ein zu diesen Abmessungen passendes Hüllrohr ausgewählt werden. Dadurch können beispielsweise Maßabweichungen berücksichtigt werden, die durch oval verformte Antiresonanzelement-Vorformlinge im gefügten Ensemble entstehen können.

Im Hinblick darauf wird der Außendurchmesser des gefügten Ensembles von einem Hüllkreis definiert, wobei gemäß Verfahrensschritt (a) ein Hüllrohr bereitgestellt wird, dessen Hüllrohr-Innendurchmesser um eine Spaltweite größer ist als der Hüllkreis.

Das Hüllrohr kann somit nachträglich so ausgewählt werden, dass die Spaltweite möglichst klein ist. Die kleine Spaltweite erleichtert ein anschließendes defektfreies Verbinden des gefügten Ensembles mit der Hüllrohr-Innenwand, das beispielsweise durch Kollabieren oder Elongieren der primären Vorform erfolgen kann. Spaltweiten von weniger als 0,2mm sind aus Praktikabilitätsgründen nicht bevorzugt.

Die unter Einsatz des gefügten Ensembles erzeugte primäre Vorform kann direkt zu der Hohlkernfaser gezogen werden. Optionale und in der Regel wird die primäre Vorform aber weiterverarbeitet, um daraus eine hier als "sekundäre Vorform" bezeichnete Vorform zu erzeugen. In zuletzt genannten Fall ist die sekundäre Vorform die erfindungsgemäße Vorform.

Maßnahmen zur Herstellung der Vorform und insbesondere des gefügten Ensembles sind weiter oben im Zusammenhang der Herstellung der Hohlkernfaser erläutert und diese Erläuterungen werden hiermit einbezogen.

Hinsichtlich der Vorform für eine Hohlkernfaser wird die oben genannte technische Aufgabe durch eine Vorform mit den Merkmalen von Anspruch 13 gelöst.

Insbesondere wird diese Aufgabe ausgehend von einer Vorform der eingangs genannten Gattung erfindungsgemäß dadurch gelöst, dass mindestens ein Teil der Antiresonanzelement-Vorformlinge als gefügtes Ensemble vorliegt, in dem die Antiresonanzelement-Vorformlinge mit parallelen Rohr-Längsachsen in einer polygonalen Konfiguration gleichmäßig verteilt angeordnet sind.

Bei der Vorform im Sinne der Erfindung handelt es sich um eine primäre Vorform oder um eine sekundäre Vorform. Der Mantelbereich der Vorform umfasst das Hüllrohr, das von mindestens einem weiteren Mantelrohr umhüllt sein kann. An der Innenseite des Hüllrohres sind Antiresonanzelement-Vorformlinge angeordnet und mit dieser beispielsweise durch Ankleben oder thermisches Bonden verbunden. Mindestens ein Teil dieser Antiresonanzelement-Vorformling, vorzugsweise alle Antiresonanzelement-Vorformlinge, sind miteinander verbunden und Bestandteil eines vorkonfektionierten, gefügten Ensembles, in dem sie eine Konfiguration bilden, die einen symmetrischen polygonalen oder unsymmetrischen polygonalen Querschnitt aufweist. Durch die Vorkonfektionierung entfallen Positionierungs- und Ausrichtungsmaßnahmen, die andernfalls bei der Montage zur Herstellung der primären Vorform erforderlich wären. Insoweit werden diese Montageschritte erleichtert und die Maßhaltigkeit der Antiresonanzelement-Vorformlinge wird verbessert.

Maßnahmen zur Herstellung der Vorform sind weiter oben erläutert und diese Erläuterungen werden hiermit einbezogen.

### Definitionen

Einzelne Verfahrensschritte und Begriffe der obigen Beschreibung werden im Folgenden ergänzend definiert. Die Definitionen sind Bestandteil der Beschreibung der Erfindung. Bei einem sachlichen Widerspruch zwischen einer der folgenden Definitionen und der übrigen Beschreibung ist das in der übrigen Beschreibung Gesagte maßgeblich.

Sofern für einen Parameter eine Messmethode nicht angegeben ist, so ist für diesen Parameter die Standard-Messmethode anzuwenden und insbesondere diejenige Messmethode, die in der entsprechenden ISO-Vorschrift niedergelegt ist, deren Veröffentlichungsdatum dem der vorliegenden Anmeldung am nächsten liegt. Sollten Messbedingungen nicht angegeben sein, so gelten als Standardbedingungen (SATP-Bedingungen für die Temperatur 298,15 K (25°C, 77°F) und für den absoluten Druck 100 kPa (14,504 psi, 0,986 atm).

### Antiresonanzelemente

Antiresonanzelemente können einfache oder verschachtelte Strukturelemente der Hohlkernfaser sein. Sie haben mindestens zwei Wandungen, die aus Richtung des Hohlkerns gesehen eine negative Krümmung haben (konvex) oder keine Krümmung haben (plan, gerade). Sie bestehen in der Regel aus einem Material, das für das Arbeitslicht transparent ist, beispielsweise aus Glas, insbesondere aus dotiertem oder nicht dotiertem SiO₂, einem Kunststoff, insbesondere aus einem Polymer, aus einem Verbundwerkstoff oder aus kristallinem Material.

### Antiresonanzelement-Vorformling

Als Antiresonanzelement-Vorformlinge werden Bauteile oder Bestandteile der Vorform bezeichnet, die im Wesentlichen durch einfaches Langziehen beim Faserziehprozess zu Antiresonanzelementen in der Hohlkernfaser umgeformt werden. Verschachtelte Antiresonanzelement-Vorformlinge bilden in der Hohlkernfaser verschachtelte Antiresonanzelemente.

Im einfachsten Fall bestehen sie aus nur einem ARE-Rohr. Sie können aber auch einfach oder mehrfach verschachtelt sein. Verschachtelte Antiresonanzelement-Vorformlinge setzen sich zusammen aus einem ARE-Außenrohr und mindestens einem weiteren Strukturelement, das in der Innenbohrung des ARE-Außenrohres angeordnet ist. Bei dem weiteren Strukturelement kann es sich um ein weiteres Rohr handeln, das an der Innenmantelfläche des Außenrohres anliegt. Das weitere Rohr wird als "Nested Element" oder kurz als "NE- Innenrohr" oder auch als "verschachteltes NE-Innenrohr" bezeichnet.

In der Innenbohrung des NE-Innenrohres kann bei mehrfach verschachtelten Antiresonanzelement-Vorformlingen mindestens ein weiteres Strukturelement angeordnet sein, beispielsweise ein an der Innenmantelfläche des verschachtelten NE-Innenrohres anliegendes, drittes Rohr. Um bei mehrfach verschachtelten Antiresonanzelement-Vorformlingen zwischen den mehreren "Innenrohren" zu unterscheiden, die innerhalb des ARE-Außenrohres angeordnet sind, wird gegebenenfalls zwischen "äußerem NE-Innenrohr" und "innerem NE-Innenrohr" unterschieden.

### Vorform / primäre Vorform / sekundäre Vorform / Kernvorform (Cane)

Die Vorform ist dasjenige Bauteil, aus dem die antiresonante Hohlkernfaser gezogen wird. Es ist eine primäre Vorform oder eine durch Weiterverarbeitung der primären Vorform erzeugte sekundäre Vorform. Die primäre Vorform kann als Baugruppe aus mindestens einem Hüllrohr und darin lose aufgenommenem gefügtem Ensemble oder fest darin fixiertem gefügtem Ensemble vorliegen.

Die Weiterverarbeitung der primären Vorform zu einer sekundären Vorform, aus der die Hohlkernfaser gezogen wird, kann eine einmalige oder wiederholte Durchführung von einem oder mehreren der folgenden Heißformprozesse umfassen:
(i) Elongieren,
(ii) Kollabieren,
(iii) Kollabieren und gleichzeitiges Elongieren,
(iv) Aufkollabieren von zusätzlichem Mantelmaterial,
(v) Aufkollabieren von zusätzlichem Mantelmaterial und anschließendes Elongieren,
(vi) Aufkollabieren von zusätzlichem Mantelmaterial und gleichzeitiges Elongieren.

Als Kernvorform (engl. Cane) wird in der Literatur eine Vorform bezeichnet, die durch Kollabieren und/oder Elongieren einer primären Vorform erhalten wird und die damit unter die Definition der sekundären Vorform fällt. Typischerweise wird sie vor oder beim Ziehen der Hohlkernfaser mit zusätzlichem Mantelmaterial überfangen.

### Gefügtes Ensemble

Es ist ein selbsttragendes, handhabbares Gebilde, das mindestens drei Antiresonanzelement-Vorformlinge enthält, deren Längsachsen parallel ausgerichtet und die in einer polygonalen Konfiguration angeordnet sind, und die miteinander unmittelbar oder mittelbar über ein Zwischenelement oder über mehrere Zwischenelemente miteinander verbunden sind. Die Antiresonanzelement-Vorformlinge bilden eine geschlossene Konfiguration mit vorzugsweise symmetrisch-(regelmäßig-)polygonalem Querschnitt. Das Zwischenelement ist eine Verbindungsmasse oder es liegt als mindestens ein Verbindungskörper vor. Das Zwischenelement besteht aus Zwischenelement-Glas oder es bildet nach dem Erschmelzen ein Zwischenelement-Glas. Das Zwischenelement-Glas hat die gleiche Zusammensetzung wie die Antiresonanzelement-Vorformlinge oder es hat eine andere Zusammensetzung. Insbesondere kann das Zwischenelement-Glas eine vom Glas der Antiresonanzelement-Vorformlinge abweichende, insbesondere eine niedrigere Viskosität haben.

### Elongieren / Kollabieren

Beim Elongieren wird die primäre Vorform thermisch getreckt. Die Streckung kann ohne gleichzeitiges Kollabieren erfolgen. Das Elongieren kann maßstäblich erfolgen, so dass sich beispielsweise die Form und Anordnung von Bauteilen oder Bestandteilen der primären Vorform im gestreckten, elongierten Endprodukt widerspiegeln. Beim Elongieren kann die primäre Vorform aber auch nicht-maßstäblich gezogen und ihre Geometrie verändert werden.

Beim Kollabieren wird eine Innenbohrung verengt oder Ringspalte zwischen rohrförmigen Bauteil werden geschlossen oder verengt. Das Kollabieren geht in der Regel mit einem Elongieren einher.

### Hohlkern / Innerer Mantelbereich / Äußerer Mantelbereich

Die Baugruppe aus Hüllrohr und darin lose aufgenommenen oder fest fixiertem gefügten Ensemble wird hier auch als "primäre Vorform" bezeichnet. Die primäre Vorform umfasst den Hohlkern und einen Mantelbereich. Dieser Mantelbereich wird auch als "innerer Mantelbereich" bezeichnet, wenn es auch einen "äußeren Mantelbereich" gibt, der beispielsweise durch Aufkollabieren auf die primäre Vorform erzeugt worden ist, und wenn zwischen diesen Mantelbereichen unterschieden werden soll. Die Bezeichnungen "innerer Mantelbereich" und "äußerer Mantelbereich" werden auch für die entsprechenden Bereiche in der Hohlkernfaser oder in Zwischenprodukten genutzt, die durch Weiterverarbeitung der primären Vorform erhalten werden.

### Querschnitt / Innenbohrung

Der Begriff "Querschnitt" in Verbindung mit langestreckten Antiresonanzelement-Vorformlingen, deren zylinderförmigen Strukturelementen und dem Ensemble bezeichnet stets den Querschnitt senkrecht zur jeweiligen Längsachse, und zwar - sofern nichts anderes angegeben - bei rohrförmigen Bauteilen den Querschnitt der Außenkontur (nicht: den Querschnitt der Innenkontur).

Die Bezeichnung "Rohrinnenseite" wird auch als Synonym für "Rohr-Innenmantelfläche" und die Bezeichnung "Rohraußenseite" wird auch als Synonym für "Rohr-Außenmantelfäche" verwendet. Der Begriff "Innenbohrung" in Verbindung mit einem Rohr besagt nicht, dass die Innenbohrung durch einen Bohrvorgang erzeugt worden ist.

### Ovalitätsgrad

Der Ovalitätsgrad beträgt 1 bei einem Rohr mit kreisrundem Querschnitt. Bei einem Rohr mit elliptischem Querschnitt ergibt sich der Ovalitätsgrad aus dem Verhältnis der längsten Querschnittsachse und der kürzesten Querschnittsachse, jeweils bezogen auf den Außendurchmesser des Rohres.

### Oberes Ende / unteres Ende

Die Lokaladverbien "oben" und "unten" bezeichnen die Position der jeweiligen Enden des gefügten Ensembles beim thermischen Strecken mit vertikal orientierter Ensemble-Längsachse. Beim thermischen Strecken mit horizontal orientierter Ensemble-Längsachse bezeichnet "oben" die in Ziehrichtung vorgelagerte Position und "unten" die in Ziehrichtung nachgelagerte Position.

### Ausführungsbeispiel

Nachfolgend wird die Erfindung anhand eines Ausführungsbeispiels und einer Zeichnung näher erläutert. Im Einzelnen zeigt
- **Figur 1**: eine Skizze einer Ausführungsform eines gefügten Ensembles zur Herstellung einer Vorform für Hohlkernfasern in einem Querschnitt,
- **Figur 2**: eine Skizze einer weiteren Ausführungsform eines gefügten Ensembles zur Herstellung einer Vorform für Hohlkernfasern in einem Querschnitt,
- **Figur 3**: eine Skizze einer weiteren Ausführungsform eines gefügten Ensembles zur Herstellung einer Vorform für Hohlkernfasern in einem Querschnitt,
- **Figur 4a**: eine Skizze einer Ausführungsform eines Verbindungskörpers zum Einsatz in einem gefügten Ensemble in einem Längsschnitt,
- **Figur 4b**: eine Skizze einer anderen Ausführungsform eines Verbindungskörpers zum Einsatz in einem gefügten Ensemble in einem Längsschnitt,
- **Figur 5**: eine Skizze einer Ausführungsform eines gefügten Ensembles in einem Längsschnitt,
- **Figuren 6a bis 6c**: Skizzen zur Erläuterung einer Verfahrensweise zur Herstellung einer primären Vorform, und
- **Figur 7**: ein Diagramm mit der Verteilung der Winkelpositionen der ARE-Außenrohre über die Länge eines gefügten Ensembles.

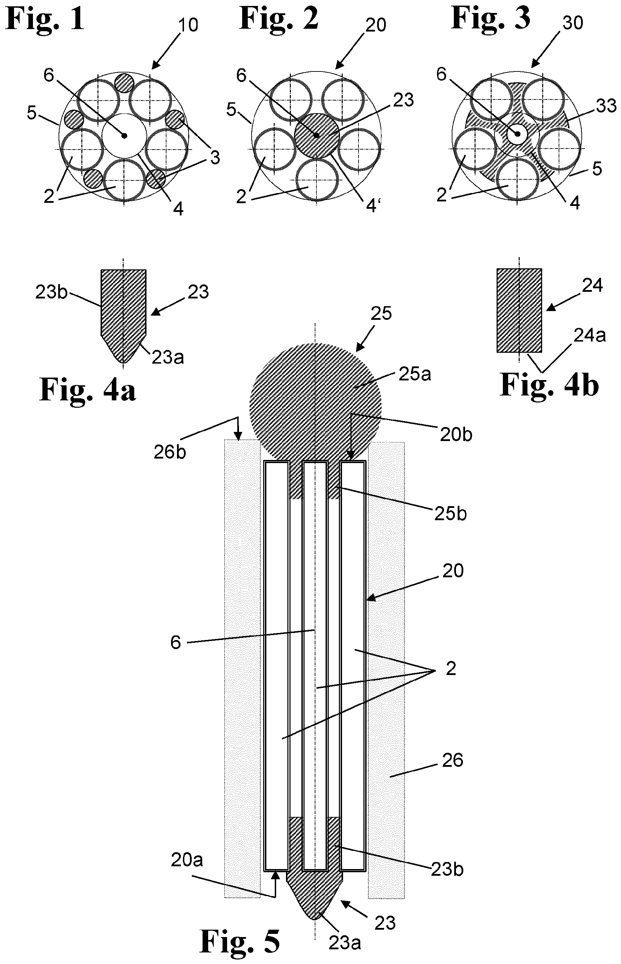

**Figur 1** zeigt schematisch ein selbsttragendes, gefügtes Ensemble 10, das fünf ARE-Rohre 2 enthält. Die Rohr-Längsachsen verlaufen parallel zueinander und in der gegebenen Ansicht senkrecht zur Papierebene. Das gefügte Ensemble 10 bildet eine im Querschnitt pentagonale Konfiguration mit fünfzähliger Symmetrie bezüglich einer durch den Punkt 6 angedeuteten Ensemble-Mittelachse. Die pentagonale Konfiguration definiert einen Innenkreis 4, um den die ARE-Rohre gleichmäßig verteilt sind. Alle ARE-Rohre 2 befinden sich innerhalb eines Hüllkreises 5.

Alle ARE-Rohre 2 bestehen aus undotiertem Quarzglas, haben einen kreisrunden Querschnitt sowie die gleichen nominalen Abmessungen: der Außendurchmesser beträgt 7,5mm, die Wanddicke 0,5mm und die Länge 780mm.

Zwischen den ARE-Rohren 2 sind jeweils stabförmige Abstandselemente 3 angeordnet. Die Stab-Längsachsen verlaufen parallel zu den Längsachsen der ARE-Rohre 2. Die Abstandselemente 3 bestehen aus Quarzglas, das mit Fluor dotiert ist und das deswegen eine niedrigere Viskosität aufweist als das undotierte Quarzglas der ARE-Rohre 2. Die Abstandselemente 3 haben jeweils einen Außendurchmesser von 3mm und eine Länge von 50mm. Im Bereich beider Stirnseiten der ARE-Rohre 2 sind sie punktuell mit diesen verschweißt. Jedes der Abstandselemente 3 verbindet somit zwei benachbarte ARE-Rohre 2, ohne dass sich ARE-Rohre 2 untereinander berühren. Die Anzahl der Abstandselemente 3 ist dieselbe wie die der ARE-Rohre 2, nämlich fünf in diesem Beispiel. Die Größe und Position der Abstandselemente 3 ist so gewählt, dass sie vollständig innerhalb des von Innenkreis 4 und Hüllkreis 5 aufgespannten Querschnittsflächenbereichs liegen. Der Innenkreis 4 hat einen Durchmesser von 8mm und der Hüllkreis 5 hat einen Außendurchmesser von 23mm.

Das in **Figur 2** schematisch dargestellte selbsttragende, gefügte Ensemble 20 umfasst ebenfalls fünf ARE-Rohre 2 mit den anhand Figur 1 erläuterten Abmessungen, Eigenschaften und Orientierungen. Im Unterschied zu Figur 1 sind die ARE-Rohre 2 hier nicht um einen Innenkreis (4), sondern um einen zentralen zylinderförmigen Verbindungskörper 23 gleichmäßig verteilt, dessen Außendurchmesser einen Innenkreis 4' vorgibt. Der Verbindungskörper 23 besteht aus Quarzglas, das mit Fluor dotiert ist und das deswegen eine niedrigere Viskosität aufweist als das undotierte Quarzglas der ARE-Rohre 2. Der Verbindungskörper 23 hat einen Durchmesser von 8mm und eine Länge von 50mm. Die ARE-Rohre 2 sind punktuell mit dem Verbindungskörper 23 verschweißt.

Der Verbindungskörper 23 hat einen zylinderförmigen Längenabschnitt 23b, an den sich eine Spitze 23aanschließt, wie in **Figur 4a** schematisch dargestellt. Diese Spitze 23a ragt aus dem gefügten Ensemble 20 heraus, wie dies aus der Darstellung von Figur 5 ersichtlich ist.

Bei einer anderen Ausführungsform ist ein Ende 24a des zentralen, zylinderförmigen Verbindungskörpers 24 planar ausgeführt, wie dies schematisch in **Figur 4b** gezeigt ist.

Bei der in **Figur 3** schematisch gezeigten Ausführungsform wird als Verbindungskörper eine maßgefertigte Glasschablone 33 eingesetzt, die die ARE-Rohre 2 teilweise umgreift. Dadurch ergibt sich eine besonders hohe Positionierungsgenauigkeit in azimutaler und in radialer Richtung. Die regelmäßig-pentagonale Konfiguration der ARE-Rohre 2 umschließt im Querschnitt gesehen wiederum einen Innenkreis 4.

**Figur 5** zeigt schematisch eine Ausführungsform eines selbsttragenden, gefügten Ensembles 20 mit einer im Querschnitt pentagonalen Konfiguration der ARE-Rohre 2 in einem Längsschnitt. Die ARE-Rohre 2 aus nicht-dotiertem synthetischen Quarzglas sind hier um zwei zentrale Verbindungskörpern 23, 25 aus einem mit Fluor dotierten Quarzglas gleichmäßig verteilt und mit diesen lokal verschweißt. Die Verbindungskörper 23, 25 haben jeweils einen zylinderförmigen Längenabschnitt 23b; 25b mit einer Länge von 50mm und einem Durchmesser von 8mm, der in das gefügte Ensemble 20 hineinragt, und um den herum die ARE-Rohre 2 gleichmäßig verteilt sind.

Beim dem einen zentralen Verbindungskörper 23 ist ein Ende als Spitze 23a ausgeführt, wie in Figur 4a schematisch dargestellt. Die Spitze 23a ragt aus dem unteren stirnseitigen Ende 20a des gefügten Ensembles 20 heraus. Am gegenüberliegenden, oberen stirnseitigen Ende 20a des gefügten Ensembles 20 ist der zweite Verbindungskörper 25 angeordnet. Bei diesem ist der zylinderförmige Längenabschnitt 25b mit einer Kugel 25a verbunden, die vollständig aus dem oberen stirnseitigen Ende 20b des gefügten Ensembles 20 herausragt. Die Kugel 25a hat einen Durchmesser, der so groß ist, dass die Kugel 25 das gefügte Ensemble 20 allseitig radial um etwa 2mm überragt, so dass das gefügte Ensemble 20 während eines Weiterverarbeitungsschritts an der Kugel 25 hängend gehalten werden kann. Die Kugel 25a ist als Vollkugel und bevorzugt als Hohlkugel ausgeführt. Die hängende Halterung des gefügten Ensembles 20 erfolgt dabei dadurch, dass sich die Kugel 25 auf der oberen Stirnseite 26b eines Hüllrohres 26 abstützt, in dessen Innenbohrung das gefügte Ensemble 20 eingesetzt ist. Das Hüllrohr 26 mit dem darin eingesetzten und hängend gehaltertem Ensemble 20 sind in Figur 5 schematisch angedeutet.

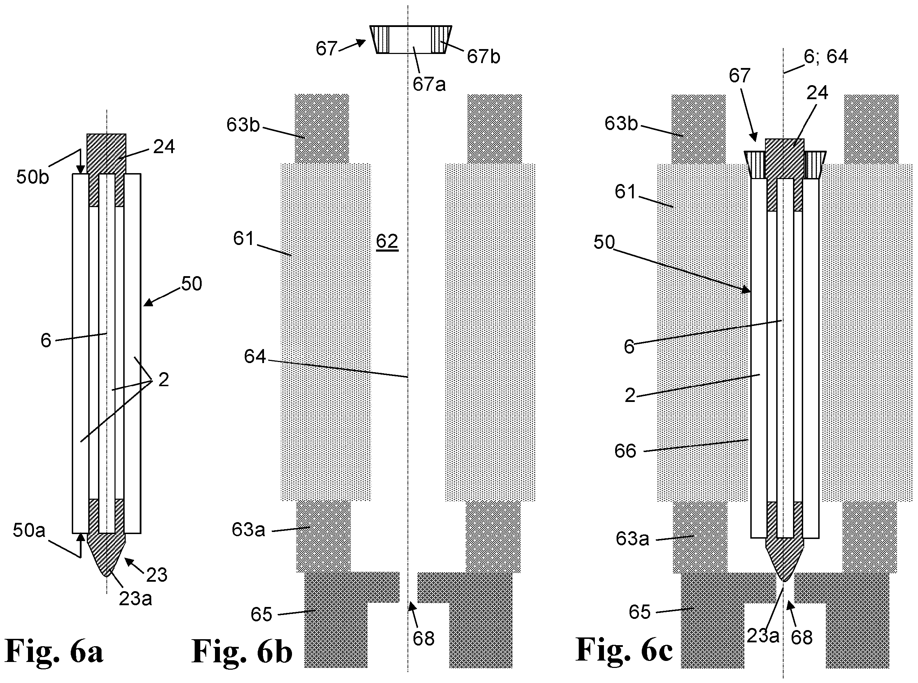

Nachfolgend wird anhand der **Figuren 6a bis 6c** eine Verfahrensweise zur Herstellung einer primären Vorform beispielhaft erläutert.

**Figur 6a** zeigt schematisch das Bereitstellen eines gefügten Ensembles 50. Das Ensemble 50 wird nach dem Verschweißen der einzelnen Komponenten einer Qualitätsprüfung unterzogen. Dabei werden insbesondere die Winkelpositionen der einzelnen ARE-Rohre 2 überprüft, und der maximale Außendurchmesser über die Ensemble-Länge wird bestimmt. Der maximale Außendurchmesser beträgt im Ausführungsbeispiel 23mm.

**Figur 6b** zeigt schematisch das Bereitstellen eines Hüllrohres 61. Dieses wird so ausgewählt, dass seine Innenbohrung 62 einen minimalen Innendurchmesser (über die Hüllrohr-Länge gesehen) aufweist, der nur geringfügig größer ist als der maximale Außendurchmesser des Ensembles 50. Im Ausführungsbeispiel wird ein Hüllrohr 61 ausgewählt, dessen Innenbohrung 62 einen minimalen Innendurchmesser von 24mm hat. Das Hüllrohr 61 besteht aus undotiertem, synthetischem Quarzglas. An beide Stirnseiten werden Halterohre 63a, 63b angesetzt. Bei vertikal orientierte Längsachse 64 steht das untere Halterohr 63a auf einem Podest 65 auf, das eine Mittenöffnung 68 aufweist, die koaxial zur Hüllrohr-Längsachse 64 verläuft. Das obere Halterohr 63b, das Hüllrohr 61, das untere Halterohr 63a und das Podest 65 sind miteinander verschweißt.

Ferner wird eine Positionierungsschablone 67 bereitgestellt, die eine zylindrische Innenbohrung 67a und einen konischen Außenrand 67b hat. Die zylindrische Innenbohrung 67a hat einen Durchmesser von 8,2mm. Der konischen Außenrand 67b deckt einen Außendurchmesserbereich zwischen 26mm und 22mm ab.

**Figur 6c** zeigt schematisch den Verfahrensschritt, in dem das gefügte Ensemble 50 in die Innenbohrung 62 des Hüllrohres 61 eingesetzt wird. Das Hüllrohr 61 ist auf Basis der vorher am gefügten Ensemble 50 durchgeführten Qualitätskontrolle und der exakten Vermessung so ausgelegt, dass zwischen dem gefügten Ensemble 50 und der Hüllrohr-Innenwand ein Spalt 66 mit einer Spaltweite von etwa 0,5mm verbleibt. Die aus dem gefügten Ensemble 50 nach unten herausragende Spitze 23a des Verbindungskörper 23 reicht in die Mittenöffnung 68 hinein, was zu einer Zentrierung des unteren Endes des gefügten Ensembles 50 beiträgt. Die

Länge des Hüllrohres 61 beträgt 850mm. Sie ist so gewählt, dass bei aufliegender Spitze 23a sich das obere Ende des gefügten Ensembles 50 vollständig innerhalb der Hüllrohr-Innenbohrung 62 befindet und gleichzeitig der obere Verbindungskörper 24 ein Stück aus der Innenbohrung 62 herausragt. Der obere, zylinderförmige Verbindungskörper 24 wird mittels der Positionierungsschablone 67 überfangen und in horizontaler Richtung zentriert, wobei sich der konische Außenrand 67b an der Innenwand des Hüllrohres 61 anlegt.

Die aus Hüllrohr 61, gefügtem Ensemble 50, den Halterohren 63a, 63b und den Zentrierhilfen (Podest 65; Positionierungsschablone 67) gebildete primäre Vorform 60 wird anschließend zu einer sekundären Vorform, einem sogenannten "Cane" thermisch gestreckt. Dabei verbinden sich das gefügte Ensemble 50 über seine gesamte Länge mit der Innenwand des Hüllrohres 61. Anschließend wird der "Cane" mit einem Überfangzylinder aus Quarzglas mit einem Außendurchmesser von 75mm und einer Wandstärke von 25mm überfangen, wobei der Überfangzylinder auf den "Cane" aufkollabiert und gleichzeitig zu einer weiteren sekundären Vorform elongiert wird. Beim Kollabier- und Elongierschritt wird der Spalt zwischen dem Überfangzylinder und dem "Cane" evakuiert. Die im Kollabier- und Elongierprozess auf diese Weise gebildete sekundäre Vorform wird anschließend zu einer antiresonanten Hohlkernfaser gezogen.

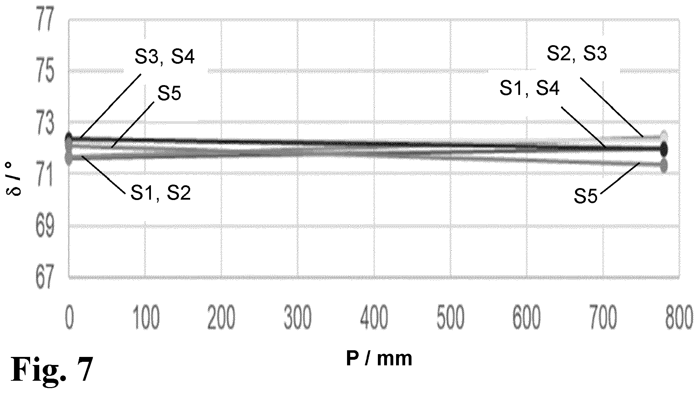

Das Diagramm von **Figur 7** zeigt Ergebnisse von Positionsmessungen bei einem gefügten Ensemble, das zwei zentrale, kurze Verbindungsstäbe sowie fünf ARE-Rohre enthält. An den stirnseitigen Enden des Ensembles befindet sich jeweils einer der zentralen Verbindungsstäbe. Um deren Mantelflächen sind die ARE-Rohre unter Bildung einer pentagonalen Konfiguration gleichmäßig verteilt und mit diesen verschweißt. Die ARE-Rohre haben jeweils einen Außendurchmesser von 7,46mm, und die Wandstärke liegt bei 0,5mm. Figur 2 zeigt schematisch die Ansicht auf eine der Stirnseiten. In dieser Ansicht beträgt der nominale Verteilungswinkel zwischen den Mittelpunkten der ARE-Rohre um die Ensemble-Längsachse 72 Winkelgrade.

Im Diagramm von Figur 8 ist die jeweilige Winkelposition δ (in Winkelgraden) der ARE-Rohre (bezeichnet als S1 bis S5) gegen die Längenposition P (in mm) aufgetragen. Hierzu werden die beiden Endflächen vermessen. Das Diagramm zeigt, dass die ARE-Rohre über ihre Länge nur sehr geringe Winkelabweichungen aufweisen.

## Patentansprüche

1. Verfahren zur Herstellung einer antiresonanten Hohlkernfaser, die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:
(a) Bereitstellen eines Hüllrohres, das eine Hüllrohr-Innenbohrung mit einem Hüllrohr-Innendurchmesser und eine Hüllrohr-Längsachse aufweist,
(b) Bereitstellen einer Vielzahl von rohrförmigen Antiresonanzelement-Vorformlingen, die jeweils eine Rohrlänge und eine Rohr-Längsachse aufweisen,
(c) Einbringen der Vielzahl der Antiresonanzelement-Vorformlinge in die Hüllrohr-Innenbohrung unter Bildung einer primären Vorform,
(d) Elongieren der primären Vorform zu der Hohlkernfaser oder Weiterverarbeitung der primären Vorform zu einer sekundären Vorform, aus der die Hohlkernfaser gezogen wird.
**dadurch gekennzeichnet, dass** das Bereitstellen der Antiresonanzelement-Vorformlinge gemäß Verfahrensschritt (b) ein Anordnen der Antiresonanzelement-Vorformlinge mit parallelen Rohr-Längsachsen in einer polygonalen Konfiguration, und ein Zusammenfügen der polygonal konfigurierten Antiresonanzelement-Vorformlinge unter Bildung eines gefügten Ensembles umfasst, das eine Mittelachse, ein oberes Ensemble-Ende, ein unteres Ensemble-Ende und eine Ensemble-Länge aufweist.

2. Verfahren nach Anspruch 1, **dadurch gekennzeichnet, dass** der Außendurchmesser des gefügten Ensembles von einem Hüllkreis definiert wird, wobei gemäß Verfahrensschritt (a) ein Hüllrohr bereitgestellt wird, dessen Hüllrohr-Innendurchmesser um eine Spaltweite größer ist als der Hüllkreis.

3. Verfahren nach Anspruch 1 oder 2, **dadurch gekennzeichnet, dass** im gefügten Ensemble die Antiresonanzelement-Vorformlinge in einem Abstand voneinander angeordnet sind.

4. Verfahren nach einem oder mehreren der vorhergehenden Ansprüche,
**dadurch gekennzeichnet, dass** das gefügte Ensemble Fügeverbindungen zwischen mindestens einem Verbindungskörper und den Antiresonanzelement-Vorformlingen aufweist.

5. Verfahren nach Anspruch 4, **dadurch gekennzeichnet, dass** der mindestens eine Verbindungskörper eine Längserstreckung aufweist, die kürzer ist als die Ensemble-Länge, wobei er im Bereich des oberen Ensemble-Endes und/oder im Bereich des unteren Ensemble-Endes angeordnet ist.

6. Verfahren nach Anspruch 4 oder 5, **dadurch gekennzeichnet, dass** der mindestens eine Verbindungskörper als Kugel oder mindestens über einen Längenabschnitt seiner Längserstreckung als Zylinder ausgebildet ist.

7. Verfahren nach Anspruch 6, **dadurch gekennzeichnet, dass** ein Ende des Zylinders mit einem Zentrierungselement, insbesondere in Form eines Konus, einer Spitze und/oder einer Kugel, versehen ist, wobei das Zentrierungselement aus dem oberen oder dem unteren Ensemble-Ende herausragt.

8. Verfahren nach Anspruch 7, **dadurch gekennzeichnet, dass** das Hüllrohr an einer Stirnseite mit einem Halterohr verbunden wird, das koaxial zur Hüllrohr-Längsachse eine Verengung mit einem Zentrierungsloch aufweist, und dass beim Einbringen des gefügten Ensembles in die Hüllrohr-Innenbohrung das Zentrierungselement in das Zentrierungsloch teilweise hineinragt.

9. Verfahren nach einem der Ansprüche 4 bis 8, **dadurch gekennzeichnet, dass** der mindestens eine Verbindungskörper eine koaxial zur -Ensemble-Mittelachse verlaufende Mittelachse und eine Außenmantelfläche aufweist, um die herum die Vielzahl der Antiresonanzelement-Vorformlinge gleichmäßig verteilt ist.

10. Verfahren nach einem der Ansprüche 4 bis 7, **dadurch gekennzeichnet, dass** zwischen benachbarten Antiresonanzelement-Vorformlingen jeweils ein Verbindungskörper angeordnet ist.

11. Verfahren nach einem oder mehreren der vorhergehenden Ansprüche, **dadurch gekennzeichnet, dass** das gefügte Ensemble mindestens drei, vorzugsweise mindestens fünf Antiresonanzelement-Vorformlinge umfasst.

12. Verfahren zur Herstellung einer Vorform für eine antiresonante Hohlkernfaser, die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:
(a) Bereitstellen eines Hüllrohres, das eine Hüllrohr-Innenbohrung mit einem Hüllrohr-Innendurchmesser und eine Hüllrohr-Längsachse aufweist,
(b) Bereitstellen einer Vielzahl von rohrförmigen Antiresonanzelement-Vorformlingen, die jeweils eine Rohrlänge und eine Rohr-Längsachse aufweisen,
(c) Einbringen der Vielzahl der Antiresonanzelement-Vorformlinge in die Hüllrohr-Innenbohrung unter Bildung einer primären Vorform,
(d) optionale Weiterverarbeitung der primären Vorform zu einer sekundären Vorform für die Hohlkernfaser, wobei die Weiterverarbeitung eine einmalige oder wiederholte Durchführung von einem oder mehreren der folgenden Heißformprozesse umfasst:
(i) Elongieren,
(ii) Kollabieren,
(iii) Kollabieren und gleichzeitiges Elongieren,
(iv) Aufkollabieren von zusätzlichem Mantelmaterial,
(v) Aufkollabieren von zusätzlichem Mantelmaterial und anschließendes Elongieren,
(vi) Aufkollabieren von zusätzlichem Mantelmaterial und gleichzeitiges Elongieren,
**dadurch gekennzeichnet, dass** das Bereitstellen der Antiresonanzelement-Vorformlinge gemäß Verfahrensschritt (b) ein Anordnen der Antiresonanzelement-Vorformlinge mit parallelen Rohr-Längsachsen zu einer polygonalen Konfiguration, und ein Zusammenfügen der polygonal konfigurierten Antiresonanzelement-Vorformlinge unter Bildung eines gefügten Ensembles umfasst, das eine Mittelachse, ein oberes Ensemble-Ende, ein unteres Ensemble-Ende und eine Ensemble-Länge aufweist.

13. Vorform für eine antiresonante Hohlkernfaser, wobei die Vorform einen hohlen Kernbereich und einen Mantelbereich aufweist, der ein Hüllrohr (14) mit einer Hüllrohr-Wandung und eine Anzahl an einer Innenseite der Hüllrohr-Wandung angeordneter rohrförmiger Antiresonanzelement-Vorformlinge (5) umfasst, **dadurch gekennzeichnet, dass** mindestens ein Teil der Antiresonanzelement-Vorformlinge als gefügtes Ensemble vorliegt, in dem die Antiresonanzelement-Vorformlinge mit parallelen Rohr-Längsachsen in einer polygonalen Konfiguration gleichmäßig verteilt angeordnet sind.

14. Vorform nach Anspruch 13, **dadurch gekennzeichnet, dass** das gefügte Ensemble Fügeverbindungen zwischen mindestens einem Verbindungskörper und den Antiresonanzelement-Vorformlingen aufweist.

15. Vorform nach Anspruch 14, **dadurch gekennzeichnet, dass** der mindestens eine Verbindungskörper eine Längserstreckung aufweist, die kürzer ist als die Ensemble-Länge und im Bereich des oberen Ensemble-Endes und/oder im Bereich des unteren Ensemble-Endes angeordnet ist.
